# EUROPÄISCHE PATENTSCHRIFT

(11) **EP 3 429 720 B1**
(45) Veröffentlichungstag und Bekanntmachung des Hinweises auf die Patenterteilung: **11.12.2019**
(21) Anmeldenummer: 17709452.1
(22) Anmeldetag: 13.03.2017
(51) Int. Cl.: B01D 39/16, B01D 39/18

(54) **STAUBSAUGERFILTERBEUTEL MIT STAUB- UND/ODER FASERFÖRMIGEM RECYCLIERTEN MATERIAL UND/ODER SAMENFASERN**
VACUUM CLEANER FILTER BAG CONTAINING RECYCLED TEXTILE MATERIALS AND/OR COTTON LINTERS AND/OR SEED FIBERS
SAC D'ASPIRATEUR EN MATERIAUX TEXTILES RECYCLES ET/OU DE LINTERS DE COTON ET/OU DE FIBRES DE GRAINES

(30) Priorität: 17.03.2016 EP 16160921; 17.03.2016 EP 16160922; 11.07.2016 EP 16178839
(43) Veröffentlichungstag der Anmeldung: 23.01.2019
(73) Patentinhaber: Eurofilters N.V., Overpelt 3900 (BE)
(72) Erfinder: SAUER, Ralf, 3900 Overpelt (BE); SCHULTINK, Jan, 3900 Overpelt (BE)
(74) Vertreter: Grünecker Patent- und Rechtsanwälte PartG mbB
(86) Internationale Anmeldenummer: PCT/EP2017/055778
(87) Internationale Veröffentlichungsnummer: WO 2017/157820

(56) Entgegenhaltungen:
- EP-A1- 1 795 247
- EP-A2- 0 960 645
- WO-A1-2011/057641
- US-A1- 2009 223 190
- US-A1- 2011 030 557

## Beschreibung

Die vorliegende Erfindung betrifft Staubsaugerfilterbeutel aus Abfallprodukten der Textilindustrie. Zudem werden Verwendungsmöglichkeiten von Abfallprodukten der Textilindustrie für Staubsaugerfilterbeutel angegeben.

Filterbeutel aus Vliesstoffen haben Papierfilterbeutel in den letzten 10 Jahren wegen der erheblich besseren Gebrauchseigenschaften praktisch vollständig verdrängt. Insbesondere die Abscheideleistung, die Verstopfungsneigung und die mechanische Festigkeit wurden kontinuierlich verbessert. Die hierfür verwendeten Vliesstoffe sind dabei in der Regel aus thermoplastischen Kunststoffen, insbesondere Polypropylen (PP) und/oder Polyester (PET) gebildet.

Auch wenn noch weiter Bedarf an Verbesserung dieser Eigenschaften besteht, ist trotzdem schon zu spüren, dass die hohen Kosten für die aufwendigen Filterkonstruktionen immer weniger Akzeptanz beim Endkunden finden.

Außerdem wird die Verwendung hochwertiger und schwerer Vliesstoffe für ein Wegwerfprodukt aus ökologischen Gründen immer kritischer gesehen.

Biologisch abbaubare Filterbeutel wie sie in der EP 2 301 404 und der WO 2011/047764 vorgeschlagen werden, scheinen auch kein erfolgversprechender Ansatz zur Verbesserung der ökologischen Eigenschaften zu sein, da Filterbeutel oft über die Müllverbrennung entsorgt werden und eine Kompostierung alleine schon wegen des vornehmlich nicht biologisch abbaubaren Sauggutes nicht in Frage kommt.

Vliesstoff-Filterbeutel für Staubsauger bestehen heute immer aus mehreren Lagen (EP 1 198 280, EP 2 433 695, EP 1 254 693). Zum Einsatz kommen Stützlagen, um die notwendige mechanische Festigkeit zu erreichen, Grobfilterlagen, die eine hohe Speicherkapazität für Staub aufweisen, ohne dass sich der Luftwiderstand zu stark erhöht und Feinfilterlagen zur Filtration von Partikeln < 1 µm.

Zur Erhöhung der Staubspeicherfähigkeit werden seit einigen Jahren zusätzlich Diffusoren und Trennwände in Filterbeuteln eingesetzt, die die Strömungsverhältnisse im Filterbeutel optimieren sollen, um so die Standzeit zu erhöhen.

Zur Fertigung dieser unterschiedlichen Materialien kommen verschiedenste Technologien zum Einsatz. Als Feinfilterlage werden meist Meltblown Mikrofaservliesstoffe verwendet. Diese Meltblownvliesstoffe sind Extrusionsvliesstoffe, bestehen meist aus Polypropylen und weisen Filamentdurchmesser im Bereich von unter 1 µm bis zu wenigen µm auf. Um hohe Abscheideleistungen zu erreichen, werden diese Materialien elektrostatisch aufgeladen (z. B. mittels Coronaentladung). Zur weiteren Verbesserung der Abscheideleistung wurde vorgeschlagen, im Elektrospinnverfahren hergestellte Nanofasern auf Vliesstoffträgermaterialien aufzubringen (DE 199 19 809).

Für die Kapazitätslage kommen sowohl Stapelfaservliesstoffe, Extrusionsvliesstoffe, aber auch Faservliese (EP 1 795 247) aus Stapelfasern oder Filamenten zum Einsatz. Als Materialien für Kapazitätslagen werden meist Polypropylen oder Polyester, aber auch Fluff Pulp (EP 0 960 645, EP 1 198 280) verwendet.

Der Einsatz recycelter Kunststoffe (z. B. recyceltes Polyethylenterephthalat (rPET)) für Gewebe wurde in der WO 2013/106392 vorgeschlagen. Ein Filtermaterial umfassend recyclierte Fasern ist auch aus der US 2009/0223190 bekannt.

Die Verwendung von rPET als Rohstoff für Meltblown-Vliesstoffe wurde bereits untersucht (Handbook of Nonwovens, Woodhead Publishing Ltd., Ed. By S.J. Russelt, Kapitel 4.10.1).

Die CN101747596 beschreibt die Verwendung von recyclierten PET bzw. recyclierten PBT (rPET/rPBT) als Material für Microfilamente.

Ausgehend hiervon ist es somit Aufgabe der vorliegenden Erfindung, Staubsaugerfilterbeutel anzugeben, die den auf dem Markt befindlichen Staubsaugerfilterbeuteln in den Punkten Staubabscheideleistung und Standzeit in Nichts nachstehen und somit hervorragende Gebrauchseigenschaften aufweisen, jedoch vorwiegend aus wiederverwerteten Materialien oder aus Abfallmaterialien bestehen. Insbesondere ist es daher Aufgabe der vorliegenden Erfindung, ökologisch wie auch ökonomisch besonders vorteilhafte Staubsaugerfilterbeutel zu realisieren. Es soll vorzugsweise ein Anteil an wiederverwerteten Materialien im Filterbeutel von mindestens 40% realisiert werden.

Diese Aufgabe wird gelöst mit einem Staubsaugerfilterbeutel gemäß Patentanspruch 1. Die abhängigen Patentansprüche stellen dabei vorteilhafte Weiterbildungen dar. Mit Patentanspruch 17 wird die Verwendung eines bestimmten Vliesstoffs für Staubsaugerfilterbeutel geschützt.

Die vorliegende Erfindung betrifft somit einen Staubsaugerfilterbeutel, der eine einen Innenraum umschließende Wandung aus einem luftdurchlässigen Material umfasst. In das luftdurchlässige Material ist eine Einlassöffnung eingebracht. Der erfindungsgemäße Staubsaugerfilterbeutel zeichnet sich dadurch aus, dass das luftdurchlässige Material mindestens eine Lage eines Vlies stoffes umfasst, der staub- und/oder faserförmiges recycliertes Material aus der Herstel-lung von Textilien, insbesondere Baumwolltextilien, und/oder aus der Wollschur und/oder Samenfasern umfasst.

Das staub- und/oder faserförmige recyclierte Material aus der Herstellung von Textilien fällt insbesondere bei der Prozessierung von Textilmaterialien (insbesondere Textilfasern und -filamenten, sowie damit hergestellte linienförmige, flächenförmige und räumliche textile Gebilde), wie beispielsweise der Herstellung (umfassend Kardieren, Spinnen, Schneiden und Trocknen) oder dem Recyceln von Textilmaterialien an. Diese staub- und/oder faserförmigen Materialien stellen Abfallmaterialien dar, die sich auf den zur Verarbeitung der Textilien verwendeten Maschinen oder Filtermaterialien absetzen können. Die Stäube bzw. Fasern werden normalerweise entsorgt und thermisch verwertet.

Bei dem staub- und/oder faserförmigen recyclierten Material handelt es sich also beispielsweise um Produktionsabfall; dies gilt insbesondere für Material, das beim Kardieren, Spinnen, Schneiden oder Trocknen von Textilmaterialien als Abfallprodukt anfällt. Man spricht in diesem Fall auch von "preconsumer waste".

Bei dem Recycling von Textilmaterialien, also der Verarbeitung (bspw. dem Zerkleinern) von gebrauchten Textilmaterialien oder Textilien (bspw. Altkleidern) entsteht ebenfalls staub- und/oder faserförmiges recycliertes Material; hier spricht man von "post-consumer waste".

Das staub- und/oder faserförmige recyclierte Material aus der Herstellung von Textilien umfasst also insbesondere Fasern, die aus Abfallmaterialien aus der Textil- und Bekleidungsindustrie, aus Post-Consumer-Abfall (Textilien und ähnliches) und aus Produkten, die für das Recycling gesammelt wurden, gewonnen wurden.

Bei der Schafschur zur Gewinnung von Wolle fallen kurze Wollfasern als Abfallprodukt an, die eine weitere Variante eines erfindungsgemäßen staub- und/oder faserförmigen recyclierten Materials darstellen.

Dabei ist vorgesehen, dass die mindestens eine staub- und/oder faserförmiges recycliertes Material und/oder Baumwollinters umfassende Lage des Vliesstoffes bis zu 95 Gew.-%, bevorzugt 70 bis 90 Gew.-% des staub- und/oder faserförmigen recyclierten Materials und/oder Baumwollinters und mindestens 5 Gew.-%, bevorzugt 10 bis 50 Gew.-% an Bindefasern, insbesondere Bikomponentenfasern umfasst oder hieraus besteht.

Die Bindefasern können dabei z.B. sogenannte "Fusing Fibers" (Schmelzfasern) darstellen, die aus thermoplastischen, schmelzbaren Materialien gebildet sind. Diese Fusing Fibers schmelzen bei der thermischen Aktivierung auf und binden das staub- und/oderfaserförmige recyclierte Material bzw. die Samenfasern.

Weiter vorteilhaft ist hierbei, dass die bevorzugt als Bindefasern eingesetzten Bikomponentenfasern aus einem Kern, bestehend aus einem ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen besteht. Dabei kann der Kern beispielsweise aus recycliertem Polyethylenterephthalat (rPET) oder recycliertem Polypropylen (rPP) sein. Der Mantel kann aus einem reinen/frischen (virgin) Kunststoff, beispielsweise reinem PP ("virgin PP", also nicht recycliert) oder aus Polymethylpenten (PMP), sein. Neben Kern-/Mantel-Bikomponentenfasern kommen auch die anderen gebräuchlichen Varianten von Bikomponentenfasern (z. B. Side by Side) in Frage.

Die bevorzugt als Bindefasern eingesetzten Fusing Fibers oder Bikomponentenfasern können dabei teilweise oder vollständig aus recyclierten Kunststoffen, beispielsweise rPET oder rPP, bestehen. Die Bindefasern können gekräuselt ("crimped") oder glatt (ungekräuselt) sein. Die gekräuselten Bindefasern können mechanisch gekräuselt sein oder selbstkräuselnd (bspw. in Form von Bikomponentenfasern mit exzentrischem Querschnitt) ausgebildet sein.

In einer bevorzugten Ausführungsform sind die Bindefasern Stapelfasern, insbesondere mit einer Länge von 1 bis 100 mm, bevorzugt 2 bis 40 mm. Die Faserlänge kann gemäß DIN 53808-1:2003-01 bestimmt werden.

Das staub- und/oder faserförmige recyclierte Material kann Baumwollstaub sein. Die Samenfasern können Baumwolllinters oder Kapokfasern sein.

Baumwolllinters sind kurze Baumwollfasern, die am Baumwollsamenkern anhaften, nachdem das lange Samenhaar (Baumwolle) vom Kern entfernt worden ist. Baumwolllinters sind in der Faserlänge (typischerweise 1 bis 6 mm) und im Reinheitsgrad stark verschieden, nicht spinnbar und stellen in der Textilindustrie normalerweise einen nicht verwertbaren Reststoff und somit ein Abfallprodukt dar. Man kann zwischen First Cut (FC-Linters), Second Cut (SC-Linters) und Mill Run unterscheiden. Linters können gereinigt und gebleicht werden, um Cotton Linters Cellulose (CLC) zu gewinnen. Auch Baumwolllinters können für die Vliesstoffe, die in luftdurchlässigen Materialien für die erfindungsgemäßen Staubsaugerfilterbeutel eingesetzt werden können, verwendet werden. Insbesondere können ungereinigte und ungebleichte FC- und/oder SC-Linters verwendet werden.

In der Vliesstofflage, die im luftdurchlässigen Material enthalten ist, ist das staub- und/oder faserförmige recyclierte Material bzw. sind die Samenfasern (insbesondere Baumwolllinters) gebunden. Das Vliesstoffmaterial hat insofern einen Bindeschritt durchlaufen. Die Bindung des staub- und/oder faserförmigen recyclierten Materials und/oder der Samenfasern erfolgt dabei bevorzugt darüber, dass der Vliesstofflage Bindefasern zugesetzt sind, die beispielsweise thermisch aktiviert werden können (Thermofusion).

Die Herstellung einer entsprechenden Vliesstofflage kann somit dadurch erfolgen, dass beispielsweise das staub- und/oder faserförmige recyclierte Material und/oder die Samenfasern zusammen mit den Bindefasern in einem aerodynamischen Verfahren abgelegt werden und anschließend eine Bindung zum fertigen Vliesstoff durch thermische Aktivierung der Bindefasern erfolgt.

Unter aerodynamischen Verfahren sind Trockenverfahren gemeint, wie sie in Abschnitt 4.1.3 des Handbuchs "Vliesstoffe" von H. Fuchs und W. Albrecht, Wiley-VCH, 2. Auflage 2012 erläutert und definiert sind. Dieser Abschnitt wird hier durch Bezugnahme aufgenommen. Die Ablage des staubund/oder faserförmige recyclierten Materials und/oder der Samenfasern zusammen mit den Bindefasern kann insbesondere mittels des Airlay- oder des Airlaid-Verfahrens erfolgen. Die Airlay-Vliesbildung kann beispielsweise mittels eines Rando Webbers erfolgen.

Für die Zwecke der vorliegenden Erfindung kann beispielsweise ein Vliesstoff verwendet werden, wie er in der WO 2011/057641 A1 beschrieben ist. Sämtliche Ausführungsformen dieser Patentanmeldung werden für die Zwecke der vorliegenden Erfindung mit übernommen.

In einer weiter bevorzugten Ausführungsform ist das luftdurchlässige Material mehrlagig aufgebaut, wobei das luftdurchlässige Material zusätzlich zur mindestens einen Lage des Vliesstoffes, der staub- und/oder faserförmiges recycliertes Material und/oder Samenfasern umfasst, mindestens eine weitere Lage aufweist, die einen Vliesstoff und/oder ein Faservlies umfasst oder hieraus gebildet ist, wobei insbesondere mindestens eine, mehrere oder sämtliche der zusätzlichen Lagen einen oder mehrere recyclierte Kunststoffe umfassen oder hieraus gebildet sind.

Der für die Zwecke der vorliegenden Erfindung verwendete Begriff "recyclierter Kunststoff" ist dabei synonym zu verstehen zu Kunststoff-Recyclaten. Zur begrifflichen Definition wird hierbei auf die Norm DIN EN 15347:2007 verwiesen.

Mindestens eine dieser Lagen ist somit bevorzugt ein Vliesstoff bzw. ein Faservlies, das recyclierte Kunststoffe umfasst und insbesondere aus recyclierten Kunststoffen gebildet ist. Im Unterschied zum aus dem Stand der Technik bekannten Staubsaugerfilterbeuteln wird somit weniger oder gar kein frisches (virgin) Kunststoffmaterial zur Herstellung der Wandung des Staubsaugerfilterbeutels zugrundeliegenden Vliesstoffen bzw. Faservliesen verwendet, sondern es gelangen überwiegend oder ausschließlich Kunststoffe zum Einsatz, die bereits in Verwendung waren und durch entsprechende Recycling-Verfahren wiedergewonnen wurden. Derartige Filterbeutel sind in ökologischer Hinsicht deutlich vorteilhaft, da sie in hohem Maße rohstoffneutral hergestellt werden können. Diese Filterbeutel bieten ebenso ökonomische Vorteile, da die meisten recyclierten Kunststoffmaterialien deutlich günstiger bezogen werden können, als die entsprechenden Rohstoffe, die nicht recycliert sind ("virgin" Kunststoffe).

Im Sinne der vorliegenden Erfindung bezeichnet ein Vliesstoff dabei ein Wirrgelege, das einen Verfestigungsschritt durchlaufen hat, so dass es eine ausreichende Festigkeit aufweist, um zum Beispiel maschinell (also in industriellem Maßstab) zu Rollen auf- bzw. abgewickelt zu werden. Die für ein Aufwickeln minimal erforderliche Bahnspannung beträgt 0,25 PLI oder 0,044 N/mm. Die Bahnspannung sollte nicht höher als 10% bis 25% der Mindesthöchstzugkraft (gemäß DIN EN 29073-3:1992-08) des aufzuwickelnden Materials betragen. Daraus resultiert eine Mindesthöchstzugkraft für ein aufzuwickelndes Material von 8,8 N pro 5 cm Streifenbreite.

Ein Faservlies entspricht einem Wirrgelege, das jedoch keinen Verfestigungsschritt durchlaufen hat, so dass im Gegensatz zu einem Vliesstoff ein derartiges Wirrgelege keine ausreichende Festigkeit aufweist, um zum Beispiel maschinell zu Rollen auf- bzw. abgewickelt zu werden. Bezüglich der Definition dieser Terminologie wird auf die EP 1 795 427 A1 verwiesen, deren Offenbarungsgehalt diesbezüglich mit zum Gegenstand der vorliegenden Patentanmeldung gemacht wird.

Gemäß einer bevorzugten Ausführungsform sind die Fasern des Vliesstoffs bzw. des Faservlieses, das im luftdurchlässigen Material der Wandung des erfindungsgemäßen Staubsaugerfilterbeutels beinhaltet ist, aus einem einzigen recyclierten Kunststoffmaterial gebildet.

Alternativ ist es jedoch ebenso bevorzugt, wenn die Fasern des Vliesstoffes bzw. des Faservlieses aus unterschiedlichen Materialien gebildet sind, von denen zumindest eines einen recyclierten Kunststoff darstellt. Hierbei sind insbesondere zwei Ausführungsformen denkbar:
Einerseits kann es sich um ein Gemisch mindestens zweier Fasertypen handeln, beispielsweise um Fasergemische, die aus zumindest zwei unterschiedlichen recyclierten Kunststoffen gebildet sind.

Andererseits ist es ebenso möglich, dass das Faservlies bzw. der Vliesstoff Bikomponentenfasern (BiKo-Fasern) beinhaltet oder hieraus gebildet ist, die aus einem Kern, sowie einem den Kern umhüllenden Mantel bestehen. Kern und Mantel sind dabei aus unterschiedlichen Materialien gebildet. Die Bikomponentenfasern können als Stapelfasern vorliegen oder als Extrusionsvliesstoff (beispielsweise aus Meltblownvliesstoff) ausgebildet sein, so dass die Bikomponentenfasern theoretisch unendliche Länge aufweisen und sogenannte Filamente darstellen. Bei derartigen Bikomponentenfasern ist es von Vorteil, wenn zumindest der Kern aus einem recyclierten Kunststoff gebildet ist, für den Mantel kann beispielsweise auch ein Virgin-Kunststoff, aber alternativ ebenso ein anderer recyclierter Kunststoff eingesetzt werden.

Für die Vliesstoffe bzw. Faservliese für die Zwecke der vorliegenden Erfindung ist es möglich, dass es sich hierbei um trockengelegte, nassgelegte oder Extrusionsvliesstoffe bzw. -Vliese handelt. Demzufolge können die Fasern der Vliesstoffe bzw. Faservliese endliche Länge aufweisen (Stapelfasern), aber auch theoretisch unendliche Länge aufweisen (Filamente).

Die Erfindung stellt insbesondere einen Staubsaugerfilterbeutel mit einer Wandung aus luftdurchlässigem Material bereit, wobei das Material eine Kapazitätslage und eine Feinfilterlage umfasst,
wobei die Kapazitätslage ein mit einem aerodynamischen Verfahren erhaltener Vliesstoff ist, der staub- und/oder faserförmiges recycliertes Material aus der Herstellung von Textilien, insbesondere Baumwolltextilien, und/oder aus der Wollschur und/oder Samenfasern umfasst, und wobei die Feinfilterlage ein Meltblown-Vliesstoff aus virgin PP ist, der insbesondere elektrostatisch geladen ist, oder ein Meltblown-Vliesstoff aus Bikomponentenfasern mit einem rPET- oder einem rPP-Kern und einer Hülle aus virgin PP oder virgin PMP ist oder eine Trägerschicht aus recyclierten Kunststofffasern mit einer darauf aufgebrachten Schicht aus Nanofasern ist.

Die Kapazitätslage kann also der bereits oben beschriebenen Lage aus Vliesstoff entsprechen. Die Verfestigung bzw. Vliesbindung des Vliesstoffs der Kapazitätslage kann grundsätzlich mit einem beliebigen Verfahren erfolgen. Insbesondere kann der Vliesstoff der Kapazitätslage durch thermisch aktivierte Bindefasern, beispielsweise Bikomponentenfasern, verfestigt sein. Die Kapazitätslage kann aus einerseits staub- und/oder faserförmigem recyclierten Material und/oder Samenfasern und andererseits thermisch aktivierten Bindefasern (beispielsweise umfassend einen Kern und/oder Mantel aus einem recyclierten Kunststoff - wie oben beschrieben) bestehen; in diesem Fall enthält die Kapazitätslage keine weiteren Fasern oder Bindemittel.

Der Begriff "Nanofaser" wird gemäß der Terminologie der DIN SPEC 1121:2010-02 (CEN ISO/TS 27687:2009) verwendet.

Die Feinfilterlage kann in Luftströmungsrichtung (von der Dreckluftseite zur Reinluftseite hin) hinter der Kapazitätslage angeordnet sein.

Optional kann der Staubsaugerfilterbeutel eine (zusätzliche) Verstärkungslage bzw. Stützlage in Form einer trockengelegten Vliesstofflage oder in Form einer Extrusions-Vliesstofflage aufweisen. Die trockengelegte Vliesstofflage kann - wie oben beschrieben - staub- und/oder faserförmiges recycliertes Material aus der Herstellung von Textilien, insbesondere Baumwolltextilien, und/oder aus der Wollschur und/oder Samenfasern umfassen; alternativ kann die trockengelegte Vliesstofflage Stapelfasern aus rezykliertem Kunststoff, inbesondere rPET oder rPP, umfassen. Die Extrusions-Vliesstofflage kann Mono- oder Bikomponenten-Filamente aus rezykliertem Kunststoff, inbesondere rPET oder rPP, umfassen.

Die Verstärkungslage kann in Luftströmungsrichtung hinter der Feinfilterlage angeordnet sein.

Insgesamt kann der Aufbau der Wandung des Filterbeutels gemäß der vorliegenden Erfindung ebenso ausgestaltet sein, wie in der EP 1 795 247 beschrieben. Eine derartige Wandung umfasst somit mindestens drei Lagen, wobei mindestens zwei Lagen aus mindestens einer Vliesstofflage und mindestens einer Faservlieslage, enthaltend Stapelfasern und/oder Filamente bestehen. Die Wandung des Staubsaugerfilterbeutels zeichnet sich demnach zusätzlich durch eine Schweißverbindung aus, bei der sämtliche Lagen des Filtermaterials durch Schweißverbindungen miteinander verbunden sind. Der Pressflächenanteil des Schweißmusters beträgt dabei maximal 5 % der Oberfläche der durchströmbaren Fläche des Filtermaterials bzw. Staubsaugerfilterbeutels. Bezogen auf die gesamte durchströmbare Fläche des Filterbeutels liegen durchschnittlich maximal 19 Schweißverbindungen pro 10 cm2 vor.

Beispielsweise kann das luftdurchlässige Material in einer Weise ausgestaltet sein, wie es im einleitenden Teil der vorliegenden Patentanmeldung beschrieben ist, also z.B. wie in EP 1 198 280, EP 2 433 695, EP 1 254 693, DE 199 19 809, EP 1 795 247, WO 2013/106 392 oder CN 101747596 beschrieben, solange staub- und/oder faserförmiges recycliertes Material aus der Herstellung von Textilien und/oder aus der Wollschur und/oder Samenfasern für die Herstellung dieser Filtermaterialien verwendet wurde. Bezüglich des detaillierten Aufbaus dieser Filtermaterialien wird auf den Offenbarungsgehalt dieser Druckschriften verwiesen, die in dieser Hinsicht auch zum Offenbarungsgehalt der vorliegenden Erfindung zu zählen sind.

Die vorliegende Erfindung erfasst mehrere besonders bevorzugte Möglichkeiten der mehrlagigen Ausgestaltung des luftdurchlässigen Materials, die nachfolgend vorgestellt werden. Die Mehrzahl dieser Lagen kann mittels Schweißverbindungen, insbesondere wie in der EP 1 795 427 A1 beschrieben, miteinander verbunden sein. Die Lagen können untereinander auch verklebt oder wie in WO 01/003802 beschrieben gebondet sein.

Beim zuvor genannten mehrlagigen Aufbau des luftdurchlässigen Materials sind insbesondere die folgenden Ausführungsformen vorteilhaft.

Gemäß einer Ausführungsform weist das luftdurchlässige Material mindestens eine Stützlage und mindestens eine Kapazitätslage auf, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehreren recyclierte Kunststoffe umfassen oder hieraus gebildet sind, darstellen.

Alternativ hierzu ist es ebenso möglich, dass das luftdurchlässige Material mindestens eine Stützlage, mindestens eine Feinfilterlage und mindestens eine Kapazitätslage aufweist, wobei mindestens eine oder sämtliche der Stützlagen und/oder mindestens eine oder sämtliche der Feinfilterlagen Vliesstoffe, die einen recyclierten Kunststoff oder mehrere recyclierte Kunststoffe umfassen oder hieraus gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen.

Bei den zuvor genannten Ausführungsführungsformen ist dabei vorgesehen, dass mindestens eine, bevorzugt sämtliche der Kapazitätslagen den voranstehend näher charakterisierten Vliesstoff, der staub- und/oder faserförmiges recycliertes Material und/oder Samenfasern umfasst, umfassen oder hieraus gebildet sind. Durch die erfolgte Vliesbindung weist die als Kapazitätslage ausgebildete Vliesstofflage dabei eine derart hohe mechanische Festigkeit auf, dass sie auch als Stützlage fungieren kann.

Ebenso ist es möglich die Außenlage auf der Reinluftseite aus einem relativ dünnen Material auf Basis Baumwollstaub zu machen.

Die einzelnen Lagen sind dabei entsprechend ihrer Funktion näher bezeichnet.

Eine Stützlage (manchmal auch "Verstärkungslage" genannt) im Sinne der vorliegenden Erfindung ist dabei eine Lage, die dem mehrlagigen Verbund des Filtermaterials die notwendige mechanische Festigkeit verleiht. Hierunter wird ein offener, poröser Vliesstoff bzw. ein Nonwoven mit leichtem Flächengewicht bezeichnet. Eine Stützlage dient unter anderem dazu, andere Lagen oder Schichten zu stützen und/oder vor Abrasion zu schützen. Die Stützlage kann auch die größten Partikel filtern. Die Stützlage, wie auch jede andere Lage des Filtermaterials kann gegebenenfalls auch elektrostatisch aufgeladen sein, unter der Voraussetzung, dass das Material geeignete dielektrische Eigenschaften aufweist.

Eine Kapazitätslage bietet einen hohen Widerstand gegenüber Stoßbelastung, Filtern von großen Schmutzpartikeln, Filtern eines signifikanten Anteils von kleinen Staubpartikeln, Speichern bzw. Zurückhalten von großen Mengen an Partikeln, wobei der Luft ein einfaches Durchströmen erlaubt wird und somit ein geringer Druckabfall bei hoher Partikelbeladung resultiert. Dies wirkt sich insbesondere auf die Standzeit eines Staubsaugerfilterbeutels aus.

Eine Feinfilterlage dient der Erhöhung der Filtrationsleistung des mehrlagigen Filtermaterials durch Einfangen von Partikeln, die beispielsweise durch die Stützlage und/oder die Kapazitätslage hindurch gelangen. Zur weiteren Erhöhung der Abscheideleistung kann die Feinfilterlage bevorzugt elektrostatisch (z.B. durch Coronaentladung oder Hydrocharging) aufgeladen werden, um insbesondere die Abscheidung von Feinstaubpartikeln zu erhöhen.

Einen Überblick über die einzelnen Funktionslagen innerhalb mehrlagiger Filtermaterialien für Staubsaugerfilterbeutel bietet die WO 01/003802. Das luftdurchlässige Material der Wandung des erfindungsgemäßen Staubsaugerfilterbeutels kann hinsichtlich seiner Konstruktion beispielsweise wie in diesem Patentdokument aufgebaut sein mit der Maßgabe, dass zumindest eine der Lagen des dort beschriebenen mehrlagigen Filtermaterials für den Staubsaugerfilterbeutel aus einem recyclierten bzw. mehreren recyclierten Kunststoffen gebildet ist. Der Offenbarungsgehalt der WO 01/003802 wird hinsichtlich des Aufbaus der luftdurchlässigen Filtermaterialien ebenso in die vorliegende Anmeldung mit aufgenommen.

Spezielle Ausführungsformen der zuvor genannten Aspekte der vorliegenden Erfindung sehen vor, dass jede Stützlage ein Spinnvlies oder Scrim ist, vorzugsweise mit einer Grammatur von 5 bis 80 g/m2, weiter bevorzugt von 10 bis 50 g/m2, weiter bevorzugt von 15 bis 30 g/m2 und/oder vorzugsweise mit einem Titer der das Spinnvlies bzw. das Scrim bildenden Fasern im Bereich von 0,5 dtex bis 15 dtex.

Bevorzugt weist das luftdurchlässige Material ein bis drei Stützlagen auf.

Im Falle des Vorhandenseins mindestens zweier Stützlagen ist es bevorzugt, dass die Gesamtgrammatur der Summe aller Stützlagen 10 bis 240 g/m2, bevorzugt 15 bis 150 g/m2, weiter bevorzugt 20 bis 100 g/m2, weiter bevorzugt 30 bis 90 g/m2, insbesondere 40 bis 70 g/m2 beträgt.

Alternativ oder zusätzlich zu den zuvor genannten Ausführungsformen ist es ebenso möglich, dass sämtliche Stützlagen aus einem recyclierten Kunststoff oder mehreren recyclierten Kunststoffen, insbesondere aus rPET und/oder rPP, gebildet sind.

Bei den zuvor genannten Feinfilterlagen ist es von Vorteil, wenn jede Feinfilterlage ein Extrusionsvliesstoff, insbesondere ein Meltblown-Vliesstoff ist, vorzugsweise mit einer Grammatur von 5 bis 100 g/m2, bevorzugt 10 bis 50 g/m2, insbesondere 10 bis 30 g/m2.

Das luftdurchlässige Material für die Zwecke des erfindungsgemäßen Staubsaugerfilterbeutels kann dabei vorteilhaft ein bis fünf Feinfilterlagen umfassen.

Im Falle des Vorhandenseins mindestens zweier Feinfilterlagen kann die Gesamtgrammatur der Summe aller Feinfilterlagen 10 bis 300 g/m2, bevorzugt 15 bis 150 g/m2, insbesondere 20 bis 50 g/m2 betragen.

Bevorzugt sind sämtliche Feinfilterlagen aus einem recyclierten Kunststoff oder mehreren recyclierten Kunststoffen, insbesondere rPET und/oder rPP, gebildet.

Besonders bevorzugte Feinfilterlagen sind hierbei Meltblown-Vliesstoffe, die insbesondere aus rPET gebildet werden können. Das eingesetzte rPET kann dabei nicht metallisiert oder metallisiert sein. Das rPET kann somit beispielsweise aus Getränkeflaschen (bottle flake chips) oder metallisierten PET-Folien stammen. Ebenso ist es möglich, dass die Melt-Blown-Vliesstoffe Bikomponenten-Melt-Blown-Vliesstoffe darstellen. Hierbei ist es insbesondere von Vorteil, wenn der Kern einer derartigen Bikomponentenfaser aus rPET besteht, dieses Kernmaterial wird von einem weiteren thermoplastischen Kunststoff, beispielsweise Polypropylen umhüllt.

Alternativ oder zusätzlich zu den zuvor genannten Ausführungsformen ist es ebenso möglich und insbesondere bevorzugt, wenn mindestens eine, bevorzugt sämtliche Feinfilterlagen elektrostatisch aufgeladen sind. Dies setzt voraus, dass zumindest die Oberfläche der aufzuladenden Fasern aus einem dielektrischen Material gebildet ist. Im Falle des Einsatzes von metallisiertem PET-Recyclat ist diese Ausführungsform dann lediglich im Rahmen der zuvor angesprochenen Bikomponentenfasern möglich, bei denen das metallisierte rPET den Kern der Fasern bildet. Die elektrostatische Aufladung kann dabei insbesondere Coronaentladung erfolgen.

Bei den zuvor genannten Kapazitätslagen ist es insbesondere von Vorteil, wenn mindestens eine, bevorzugt jede Kapazitätslage ein Vliesstoff ist, der staub- und/oder faserförmiges recycliertes Material aus der Herstellung von Textilien, insbesondere Baumwolltextilien, und/oder aus der Wollschur und/oder Samenfasern umfasst, wobei jede Kapazitätslage vorzugsweise eine Grammatur von 5 bis 200 g/m2, weiter bevorzugt von 10 bis 150 g/m2, weiter bevorzugt von 20 bis 100 g/m2, insbesondere 30 bis 50 g/m2 aufweist.

Das luftdurchlässige Material weist bevorzugt ein bis fünf Kapazitätslagen auf.

Im Falle des Vorhandenseins mindestens zweier Kapazitätslagen kann die Gesamtgrammatur der Summe aller Kapazitätslagen 10 bis 300 g/m2, bevorzugt 15 bis 200 g/m2, weiter bevorzugt 20 bis 100 g/m2, insbesondere 50 bis 90 g/m2 betragen.

Eine besonders bevorzugte Ausführungsform sieht die folgenden mehrlagigen Varianten für das luftdurchlässige Material vor, mit einer vom Innenraum des Staubsaugerfilterbeutels ausgesehenen Lagenfolge:
Eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage. Für den Fall, dass die Kapazitätslage eine wie voran beschrieben hohe mechanische Festigkeit aufweist, kann dabei auch auf die innerste Stützlage verzichtet werden.

Eine oder zwei Kapazitätslagen, eine oder zwei Feinfilterlagen (Meltblownlagen), eine Stützlage (Spinnvlies).

Die Stützlagen und/oder Kapazitätslagen) können dabei aus einem Vliesstoffmaterial gebildet sein, das staub- und/oder faserförmiges recycliertes Material aus der Herstellung von Textilien, insbesondere Baumwolltextilien und/oder Samenfasern umfasst.

In einer besonders bevorzugten Ausführungsform bildet dieses Vliesstoffmaterial die mindestens eine Kapazitätslage, während die anderen Lagen kein staub- und/oder faserförmiges recycliertes Material aus der Herstellung von Textilien, insbesondere Baumwolltextilien, und/oder aus der Wollschur und/oder Samenfasern umfassen.

Es können sämtliche Lagen bei den zuvor genannten Ausführungsformen auch mittels Schweißverbindungen, insbesondere wie in EP 1 795 427 A1 beschrieben, miteinander verbunden sein. Schweißverbindungen sind allerdings nicht zwingend notwendig.

Weiter vorteilhaft ist, dass der Staubsaugerfilterbeutel eine eine die Einlassöffnung einfassende Halteplatte aufweist, die aus einem oder mehreren recycelten Kunststoffen gebildet ist oder einen oder mehrere recycelte Kunststoffe umfasst. Insbesondere ist die Halteplatte dabei aus rPET gebildet oder umfasst rPET zu einem sehr hohen Anteil, beispielsweise zu mindestens 90 Gew.%. Gemäß dieser bevorzugten Ausführungsform ist somit eine weitere Erhöhung des Anteils an recyclierten Kunststoffen im Staubsaugerfilterbeutel möglich.

Gemäß einer weiter bevorzugten Ausführungsform ist vorgesehen, dass im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der staub- und/oder faserförmiges recycliertes Material aus der Herstellung von Textilien, insbesondere Baumwolltextilien und/oder Samenfasern umfasst, gebildet ist. Derartige Strömungsverteiler bzw. Diffusionen sind z.B. in den Patentanmeldungen EP 2 263 508, EP 2 442 703, DE 20 2006 020 047, DE 20 2008 003 248, DE 20 2008 005 050 bekannt. Auch die erfindungsgemäßen Staubsaugerfilterbeutel, inklusive Strömungsverteiler können entsprechend ausgestaltet sein.

Strömungsverteiler und Diffusoren werden somit vorzugsweise ebenfalls aus Vliesstoffen oder Laminaten von Vliesstoffen gefertigt. Für diese Elemente kommen bevorzugt die gleichen Materialien in Frage, wie für die Kapazitäts- und Verstärkungslagen.

Der recyclierte Kunststoff, der in speziellen Vliesstoffmaterialien oder in Halteplatten für die Staubsaugerfilterbeutel verwendet werden kann, ist dabei bevorzugt ausgewählt aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

Für viele Kunststoff-Recyclate bestehen einschlägige internationale Normen. Für PET-Kunststoff-Recyclate ist beispielsweise die DIN EN 15353:2007 einschlägig. PS-Recyclate werden in DIN EN 15342:2008 näher beschrieben. PE-Recyclate werden in DIN EN 15344:2008 behandelt. PP-Recyclate werden in DIN EN 15345:2008 charakterisiert. PVC-Recyclate sind in DIN EN 15346:2015 näher bezeichnet. Zum Zwecke der entsprechenden speziellen Kunststoffrecyclate macht sich die vorliegende Patentanmeldung die Definitionen dieser internationalen Normen zu Eigen. Die Kunststoff-Recyclate können dabei unmetallisiert sein. Ein Beispiel hierfür sind aus PET-Getränkeflaschen zurückgewonnene Kunststoffflakes oder -chips. Ebenso können die Kunststoff-Recyclate metallisiert sein, z.B. wenn die Recyclate aus metallischen Kunststofffolien erhalten wurden, insbesondere metallisierten PET-Folien (MPET).

Bei dem recyclierten Kunststoff handelt es sich insbesondere um recycliertes Polyethylenterephthalat (rPET), das beispielsweise aus Getränkeflaschen, insbesondere aus sog. Bottleflakes, also Stücke gemahlener Getränkeflaschen, erhalten wurde.

Die recyclierten Kunststoffe, insbesondere das recyclierte PET, sowohl in der metallisierten, als auch in der nicht metallisierten Fassung, können zu den entsprechenden Fasern versponnen werden, aus denen die entsprechenden Stapelfasern bzw. Meltblown- oder Spunbonds-Vliesstoffe für die Zwecke der vorliegenden Erfindung hergestellt werden können.

Eine besonders bevorzugte Ausführungsform sieht vor, dass die Gewichtssumme der Samenfasern und der ggfs. vorhandenen recyclierten Materialien, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt. Somit können die Anforderungen des Global Recycled Standard (GRS), v3 (August 2014) von Textile Exchange erreicht werden.

Der Staubsaugerfilterbeutel gemäß der vorliegenden Erfindung kann beispielsweise in Form eines Flachbeutels, eines Seitenfaltenbeutels, eines Blockbodenbeutels oder eines 3D-Beutels, wie beispielsweise eines Staubsaugerfilterbeutels für einen Upright-Staubsauger ausgebildet sein. Ein Flachbeutel weist dabei keine Seitenwände auf und ist aus zwei Materiallagen gebildet, wobei die beiden Materiallagen entlang ihres Umfangs unmittelbar miteinander verbunden, beispielsweise verschweißt oder verklebt sind. Seitenfaltenbeutel stellen eine modifizierte Form eines Flachbeutels dar und um fassen festgelegte oder ausstülpbare Seitenfalten. Blockbodenbeutel umfassen einen sogenannten Block- oder Klotzboden, der zumeist die Schmalseite des Staubsaugerfilterbeutels bildet; an dieser Seite ist in der Regel eine Halteplatte angeordnet.

Die Erfindung stellt zudem die Verwendung von Vliesstoffen, die staub und/oder faserförmiges recycliertes Material aus der Herstellung von Textilien, insbesondere Baumwolltextilien, und/oder aus der Wollschur und/oder Samenfasern umfassen, für Staubsaugerfilterbeutel bereit. Hinsichtlich der speziellen Ausgestaltung derartiger Vliesstoffe wird auf die voranstehenden Ausführungsformen verwiesen.

Die vorliegende Erfindung wird anhand der nachfolgenden beispielhaften Ausführungen näher beleuchtet, ohne die Erfindung auf die speziellen dargestellten Ausführungen zu beschränken.

Es werden Filterbeutel konzipiert, die eine oder mehrere Lagen aus einem aerodynamisch gebildeten Vliesstoff, beispielsweise einen Airlay- oder einen Airlaid-Vliesstoff aufweisen. Zusätzlich können die nachfolgend beschriebenen erfindungsgemäßen Filterbeutel eine oder mehrere Lagen mit rPET- oder rPP-Filamenten oder rPET- oder rPP-Stapelfasern aufweisen oder aus Baumwollstaub, Samenfasern oder Wollfasern aus Schurabfällen und Bicomponentenfasern gebildet sein. Die unterschiedlichen Vliesstoffe sind dabei nur für bestimmte Materiallagen geeignet. Um den Anteil an wiederverwerteten Rohstoffen noch weiter zu steigern, ist zusätzlich noch der Einsatz einer Halteplatte möglich, die aus rPET oder rPP besteht oder zumindest rPET oder rPP aufweist.

### Zu den einzelnen Filterlagen:

Als Stützlagen kommen insbesondere Spinnvlieslagen aus rPET oder rPP mit einem Flächengewicht von 5 bis 50 g/m2 und einem Titer von 1 dtex bis 15 dtex in Frage. Als Rohstoff werden beispielsweise PET-Abfälle (z. B. Stanzabfälle) und sogenannte Bottleflakes, also Stücke gemahlener Getränkeflaschen verwendet. Um die unterschiedliche Färbung der Abfälle zu überdecken, ist es möglich, das Recyclat einzufärben. Als thermisches Bindeverfahren für die Verfestigung des Spinnvlieses zu einem Spunbond ist insbesondere das HELIX® (Comerio Ercole) Verfahren vorteilhaft.

Als Feinfilterlagen werden eine oder mehrere Lagen Meltblown aus rPET oder rPP mit einem Flächengewicht von jeweils 5 bis 30 g/m2 eingesetzt. Zusätzlich können noch eine oder mehrere Meltblown Vliesstofflagen aus virgin PP vorhanden sein. Zumindest diese Lage(n) werden durch eine Coronaentladung elektrostatisch aufgeladen. Die Lagen aus rPET bzw. rPP können ebenfalls elektrostatisch geladen werden. Dabei ist lediglich zu beachten, dass dann keine metallisierten PET-Abfälle für die Fertigung verwendet werden. Alternativ können die Meltblownfilamente auch aus Bicomponentenfasern bestehen, bei denen der Kern aus rPET oder rPP und die Hülle aus einem Kunststoff, der sich besonders gut elektrostatisch aufladen lässt (z. B. virgin PP, PC, PET), gebildet wird.

Eine oder mehrere Kapazitätslagen enthalten rPET- oder rPP-Stapelfasern oder rPET- oder rPP-Filamente oder werden auf Basis von Baumwollstaub und Bicomponentenfasern hergestellt. Zur Herstellung von Kapazitätslagen sind unterschiedliche Verfahren geeignet. Gebräuchlich sind Kardierverfahren, Airlay-Verfahren oder Airlaidverfahren, bei denen zunächst Stapelfasern abgelegt werden, die dann für gewöhnlich in einem Vliesbindeschritt (z. B. durch Vernadelung, Wasserstrahlverfestigung, Ultraschallkalandrierung, mittels thermischer Verfestigung im Durchströmofen auch mittels Bikomponentenfasern oder Bindefasern, oder durch chemische Verfestigung, beispielsweise mit Latex, Hotmelt, Schaumbinder, ...) zu einem Vliesstoff verfestigt werden. Zur Kalandrierung ist insbesondere das HELIX® (Comerio Ercole) Verfahren vorteilhaft. Bei einem Airlay-Verfahren kann insbesondere eine Rando-Webber-Anlage verwendet werden.

Ebenfalls eingesetzt wird ein Verfahren, bei dem das primär entstandene Faservlies nicht verfestigt wird, sondern mit möglichst wenigen Schweißpunkten an einen Vliesstoff gebunden wird.

Dieses Verfahren ist allerdings nicht für die Variante aus Baumwollstaub geeignet. Bei beiden Verfahren ist es möglich, Stapelfasern aus rPET oder rPP zu verwenden. Kapazitätslagen können auch als Extrusionsvliesstoffe oder Extrusionsfaservliese gefertigt werden. Für diese Vliesstoffe ist ein Einsatz von rPET oder rPP ebenfalls problemlos realisierbar.

Die Filamente oder Stapelfasern können auch aus Bikomponentenmaterialien bestehen, bei denen der Kern aus rPET oder rPP und die Hülle aus einem Kunststoff, der sich besonders gut elektrostatisch aufladen lässt (z. B. virgin PP, PC, PET) gebildet wird.

Alternativ oder ergänzend können auch eine oder mehrere Lagen eines aerodynamisch gebildeten Vliesstoffes vorhanden sein, der aus Bikomponentenfasern und Baumwollstaub oder Samenfasern (bspw. Baumwolllinters) gebildet wird.

Das Flächengewicht der einzelnen Kapazitätslagen liegt bevorzugt zwischen 10 und 100 g/m2.

Die unterschiedlich hergestellten Kapazitätslagen können selbstverständlich auch miteinander kombiniert werden.

Um den Anteil an Recyclaten weiter zu erhöhen, ist die Verwendung einer Halteplatte aus rPET möglich. Wenn die Abdichtung zum Staubsaugerstutzen durch das Beutelmaterial übernommen wird, kann die Halteplatte ausschließlich aus rPET oder rPP bestehen. Für den Fall, dass die Halteplatte die Dichtfunktion übernehmen muss, kann eine TPE-Dichtung angespritzt oder angeklebt werden.

Bei Ausnutzung aller Möglichkeiten wird so ein Anteil an Recyclaten bzw. Abfallstoffen von bis zu 96 % möglich. Die folgenden Tabellen geben einige konkrete Ausführungsbeispiele mit einem Recyclatanteil von 61 % bis 89 %.

Aus den verschiedenen recyclathaltigen Vliesstoffen bzw. Faservliesen wurden die nachfolgend dargestellten Staubsaugerfilterbeutel unter Verwendung der angegebenen Materialien konzipiert, deren genaue Zusammensetzung bzw. deren Aufbau in den nachfolgenden Tabellen wiedergegeben ist. Die Staubsaugerfilterbeutel stellen dabei Flachbeutel von rechteckiger Geometrie dar, die eine Abmessung von 300 mm x 280 mm aufweisen.

**Beispiel 1**

| | Grammatur [g/m2] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 0 |
| **Filterbeutel gesamt** | | **31,4** | **60,5** |

Der Staubsaugerfilterbeutel gemäß Beispiel 1 ist dabei ebenso aus einem 7-lagigen luftdurchlässigen Material gebildet. Hierbei ist auf der Reinluftseite eine Stützlage (außen) angeordnet, an die sich in Richtung Innenraum zwei Feinfilterlagen (Meltblown aus virgin PP) anschließen. Die beiden Meltblownlagen werden von einer weiteren Stützlage eingefasst. Hieran schließen sich zwei Kapazitätslagen C und D an, die abschließend von einer auf der Dreckluftseite (innen) liegenden Stützlage eingeschlossen werden. Die Kapazitätslage C und D ist dabei aus einem Vliesstoffmaterial gebildet, das zu 80 Gew.-% aus Baumwollstaub oder Samenfasern und zu 20 % aus BiCo-Bindefaser gebildet ist. Dieses Vliesstoffmaterial ist detailliert in der WO 2011/057641 A1 beschrieben. Der Anteil des Baumwollstaubs bzw. der Samenfasern in den Kapazitätslagen wird dabei zum Gesamtanteil an Recyclat hinzugezählt.

Mit einer derartigen Ausführungsform wird ein Anteil von recycliertem Material, d. h. der Summe an recyclierten Kunststoffen, sowie Baumwollstaub oder Samenfasern von 60,5 Gew.-%, bezogen auf den gesamten Staubsaugerfilterbeutel erzielt.

**Beispiel 2**

| | Grammatur [g/m2] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage A | 35 | 5,9 | 100 |
| Kapazitätslage D | 35 | 5,9 | 80 |
| Stützlage innen | 15 | 2,5 | 100 |
| Halteplatte | | 5,0 | 0 |
| **Filterbeutel gesamt** | | **31,4** | **64,3** |

Der Staubsaugerfilterbeutel gemäß Beispiel 2 ist dabei in Analogie zum Staubsaugerfilterbeutel gemäß Beispiel 1 aufgebaut. Die äußere Kapazitätslage entspricht dabei einer Kapazitätslage gemäß den Beispielen 6 bis 8, d. h. einem kardierten Stapelfaservliesstoff, der zu 100 % aus Fasern aus recyceltem PET gebildet ist. Der Recyclat-Anteil eines fertigen Staubsaugerfilterbeutels entspricht 64,3 Gew.-%.

**Beispiel 3**

| | Grammatur [g/m2] | Gewicht pro Beutel [g] | Anteil Recyclat [%] |
|---|---|---|---|
| Stützlagen außen | 25 | 4,2 | 100 |
| Meltblown | 15 | 2,5 | 0 |
| Meltblown | 15 | 2,5 | 0 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| **Filterbeutel gesamt** | | **31,4** | **76,4** |

Der Staubsaugerfilterbeutel gemäß Beispiel 3 entspricht einem Staubsaugerfilterbeutel gemäß Beispiel 1 mit dem Unterschied, dass die Halteplatte zu 100 % aus rPET gebildet ist. Der Gesamtanteil an recyclierten Materialien in diesem Staubsaugerfilterbeutel beträgt 76,4 Gew.-%.

**Beispiel 4**

| | Grammatur [g/m2] | Gewicht pro Beutel [g] | Anteil Recyclat [%] |
|---|---|---|---|
| Stützlagen außen | 25 | 4,2 | 100 |
| Meltblown | 15 | 2,5 | 80 |
| Meltblown | 15 | 2,5 | 80 |
| Stützlage mittig | 17 | 2,9 | 100 |
| Kapazitätslage C | 35 | 5,9 | 80 |
| Kapazitätslage D | 35 | 5,9 | 80 |
| Stützlage innen | 15 | 2,5 | 100 |
| Halteplatte | | 5,0 | 100 |
| **Filterbeutel gesamt** | | **31,4** | **89,3** |

Der Staubsaugerfilterbeutel gemäß Beispiel 4 entspricht dem Staubsaugerfilterbeutel gemäß Beispiel 3, mit dem Unterschied, dass die beiden Feinfilterlagen aus einem Bikomponenten-Meltblown mit einem Kern aus rPET und einer Hülle aus Polypropylen gebildet sind. Der Gesamtanteil an Recyclat eines derartigen Staubsaugerfilterbeutels beträgt 89,3 Gew.-%.

## Patentansprüche

1. Staubsaugerfilterbeutel, umfassend eine einen Innenraum umschließende Wandung aus einem luftdurchlässigen Material sowie eine in die Wandung eingebrachte Einlassöffnung,
wobei das luftdurchlässige Material mindestens eine Lage eines Vliesstoffes umfasst, der staub- und/oder faserförmiges recycliertes Material aus der Herstellung von Textilien, insbesondere Baumwolltextilien, und/oder aus der Wollschur und/oder Samenfasern umfasst, und
wobei die mindestens eine staub- und/oder faserförmiges recycliertes Material und/oder Samenfasern umfassende Lage des Vliesstoffes bis zu 95 Gew.-% des staub- und/oder faserförmigen recyclierten Materials und/oder Samenfasern und mindestens 5 Gew.-% an Bindefasern umfasst oder hieraus besteht.

2. Staubsaugerfilterbeutel nach Anspruch 1, wobei das staub- und/oder faserförmige recyclierte Material Baumwollstaub bzw. die Samenfasern Baumwolllinters oder Kapokfasern sind.

3. Staubsaugerfilterbeutel nach einem der vorhergehenden Ansprüche, wobei die mindestens eine staub- und/oder faserförmiges recycliertes Material und/oder Samenfasern umfassende Lage des Vliesstoffes 70 bis 90 Gew.-% des staub- und/oder faserförmigen recyclierten Materials und/oder Samenfasern und 10 bis 30 Gew.-% an Bindefasern, insbesondere Bikomponentenfasern umfasst oder hieraus besteht.

4. Staubsaugerfilterbeutel nach vorhergehendem Anspruch, wobei die Bindefasern Stapelfasern mit einer Länge von 2 bis 75 mm, bevorzugt 2 bis 25 mm aufweisen.

5. Staubsaugerfilterbeutel nach Anspruch 3, wobei die Bikomponentenfasern aus einem Kern, bestehend aus einem
ersten thermoplastischen Material und einem Mantel, bestehend aus einem verglichen mit dem ersten thermoplastischen Material bei geringeren Temperaturen schmelzenden zweiten thermoplastischen Material, bestehen, wobei bevorzugt der Kern oder sowohl Kern als auch Mantel aus einem recyclierten Kunststoff oder mehreren recyclierten Kunststoffen besteht.

6. Staubsaugerfilterbeutel nach einem der vorhergehenden Ansprüche, wobei das luftdurchlässige Material mehrlagig aufgebaut ist, wobei das luftdurchlässige Material zusätzlich zur mindestens einen Lage des Vliesstoffes, der staub- und/oderfaserförmiges recycliertes Material und/oder Samenfasern umfasst, mindestens eine weitere Lage aufweist, die einen Vliesstoff und/oder ein Faservlies umfasst oder hieraus gebildet ist, wobei mindestens eine, mehrere oder sämtliche der zusätzlichen Lagen einen oder mehrere recyclierte Kunststoffe umfassen oder hieraus gebildet sind.

7. Staubsaugerfilterbeutel nach einem der vorhergehenden Ansprüche, wobei das luftdurchlässige Material
mindestens eine Stützlage und mindestens eine Kapazitätslage umfasst, wobei mindestens eine oder sämtliche der Stützlagen Vliesstoffe und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen, oder
mindestens eine Feinfilterlage, mindestens eine Kapazitätslage und optional mindestens eine Stützlage umfasst, wobei mindestens eine oder sämtliche der optionalen Stützlagen und/oder mindestens eine oder sämtliche der Feinfilterlagen Vliesstoffe, die aus einem recyclierten Kunststoff oder mehreren recyclierten Kunststoffen gebildet sind und/oder mindestens eine oder sämtliche der Kapazitätslagen Vliesstoffe oder Faservliese, die einen recyclierten Kunststoff oder mehrere recyclierte Kunststoffe umfassen oder hieraus gebildet sind, darstellen,
wobei mindestens eine, bevorzugt sämtliche der Kapazitätslagen den Vliesstoff, der staubund/oder faserförmiges recycliertes Material und/oder Samenfasern umfasst, umfassen oder hieraus gebildet sind.

8. Staubsaugerfilterbeutel nach vorhergehendem Anspruch, wobei
a) jede Stützlage ein Spinnvlies oder Scrim ist, vorzugsweise mit einer Grammatur von 5 bis 80 g/m2, weiter bevorzugt von 10 bis 50 g/m2, weiter bevorzugt von 15 bis 30 g/m2 und/oder vorzugsweise mit einem Titer der das Spinnvlies bzw. das Scrim bildenden Fa- sern im Bereich von 0,5 dtex bis 15 dtex,
b) das luftdurchlässige Material 1 bis 3 Stützlagen umfasst,
im Falle des Vorhandenseins mindestens zweier Stützlagen die Gesamtgrammatur der Summe aller Stützlagen 10 bis 240 g/m2, bevorzugt 15 bis 150 g/m2, weiter bevorzugt 20 bis 100 g/m2, weiter bevorzugt 30 bis 90 g/m2, insbesondere 40 bis 70 g/m2 beträgt,
und/oder
c) sämtliche Stützlagen aus einem recyclierten Kunststoff oder mehreren recyclierten Kunststoffen, insbesondere aus rPET gebildet sind.

9. Staubsaugerfilterbeutel nach einem der beiden vorhergehenden Ansprüche, wobei
a) jede Feinfilterlage ein Extrusionsvliesstoff, insbesondere ein Meltblown-Vliesstoff ist, vorzugsweise mit einer Grammatur von 5 bis 100 g/m2, bevorzugt 10 bis 50 g/m2, insbesondere 10 bis 30 g/m2,
b) das luftdurchlässige Material 1 bis 5 Feinfilterlagen umfasst,
c) im Falle des Vorhandenseins mindestens zweier Feinfilterlagen die Gesamtgrammatur der Summe aller Feinfilterlagen 10 bis 300 g/m2, bevorzugt 15 bis 150 g/m2, insbesondere 20 bis 50 g/m2 beträgt,
d) mindestens eine, bevorzugt sämtliche Feinfilterlagen aus einem recyclierten Kunststoff oder mehreren recyclierten Kunststoffen, insbesondere aus rPET gebildet sind und/oder
e) mindestens eine, bevorzugt sämtliche Feinfilterlagen elektrostatisch aufgeladen sind.

10. Staubsaugerfilterbeutel nach einem der Ansprüche 7 bis 9, wobei
a) mindestens eine, bevorzugt jede Kapazitätslage ein Vliesstoff ist, der staub- und/oder faserförmiges recycliertes Material aus der Herstellung von Textilien, insbesondere Baumwolltextilien, und/oder aus der Wollschur und/oder Samenfasern umfasst, wobei jede Kapazitätslage vorzugsweise eine Grammatur von 5 bis 200 g/m2, weiter bevorzugt von 10 bis 150 g/m2, weiter bevorzugt von 20 bis 100 g/m2, insbe- sondere 30 bis 50 g/m2 aufweist,
b) das luftdurchlässige Material 1 bis 5 Kapazitätslagen umfasst, und/oder
c) im Falle des Vorhandenseins mindestens zweier Kapazitätslagen die Gesamtgrammatur der Summe aller Kapazitätslagen 10 bis 300 g/m2, bevorzugt 15 bis 200 g/m2, weiter bevorzugt 20 bis 100 g/m2, insbesondere 50 bis 90 g/m2 beträgt.

11. Staubsaugerfilterbeutel nach einem der Ansprüche 7 bis 10, wobei das luftdurchlässige Material mehrlagig ausgebildet ist mit einer vom Innenraum des Staubsaugerfilterbeutels aus gesehenen Lagenfolge:
eine Stützlage, mindestens eine, vorzugsweise mindestens zwei Kapazitätslagen, vorzugsweise eine weitere Stützlage, mindestens eine vorzugsweise mindestens zwei Feinfilterlagen sowie eine weitere Stützlage.

12. Staubsaugerfilterbeutel nach einem der vorhergehenden Ansprüche, wobei der Staubsaugerfilterbeutel eine die Einlassöffnung einfassende Halteplatte aufweist, die aus einem oder mehreren recycelten Kunststoffen gebildet ist oder einen oder mehrere recycelte Kunststoffe umfasst.

13. Staubsaugerfilterbeutel nach einem der vorhergehenden Ansprüche, wobei im Innenraum mindestens ein Strömungsverteiler und/oder mindestens ein Diffusor angeordnet sind, wobei bevorzugt der mindestens eine Strömungsverteiler und/oder der mindestens eine Diffusor aus einem recyclierten Kunststoff oder mehreren recyclierten Kunststoffen oder aus einem Vliesstoffes, der staub- und/oder faserförmiges recycliertes Material aus der Herstellung von Textilien, insbesondere Baumwolltextilien, und/oder aus der Wollschur und/oder Samenfasern umfasst, gebildet ist.

14. Staubsaugerfilterbeutel nach einem der vorhergehenden Ansprüche, wobei der recyclierte Kunststoff ausgewählt ist aus der Gruppe bestehend aus recyclierten Polyestern, insbesondere recycliertem Polyethylenterephthalat (rPET), recycliertem Polybutylenterephthalat (rPBT), recylcierter Polymilchsäure (rPLA), recycliertem Polyglycolid und/oder recycliertem Polycaprolacton; recyclierten Polyolefinen, insbesondere recycliertem Polypropylen (rPP), recycliertem Polyethylen und/oder recycliertem Polystyrol (rPS); recycliertem Polyvinylchlorid (rPVC), recyclierten Polyamiden sowie Mischungen und Kombinationen hiervon.

15. Staubsaugerfilterbeutel nach einem der vorhergehenden Ansprüche, wobei der Gewichtsanteil aller recyclierten Materialien und/oder der Baumwollinters, bezogen auf das Gesamtgewicht des Staubsaugerfilterbeutels mindestens 25 %, bevorzugt mindestens 30 %, weiter bevorzugt mindesten 40 %, weiter bevorzugt mindestens 50 %, weiter bevorzugt mindestens 60 %, weiter bevorzugt mindestens 70 %, weiter bevorzugt mindestens 80 %, weiter bevorzugt mindestens 90 %, insbesondere mindestens 95 % beträgt.

16. Staubsaugerfilterbeutel nach einem der vorhergehenden Ansprüche, in Form eines Flachbeutels, eines Blockbodenbeutels oder eines 3D-Beutels.

17. Verwendung eines Vliesstoffs, der staub- und/oder faserförmiges recycliertes Material aus der Herstellung von Textilien, insbesondere Baumwolltextilien, und/oder aus der Wollschur und/oder Samenfasern umfasst, für Staubsaugerfilterbeutel und
wobei der mindestens eine staub- und/oder faserförmiges recycliertes Material und/oder Samenfasern umfassende Vliesstoff bis zu 95 Gew.-% des staub- und/oder faserförmigen recyclierten Materials und/oder Samenfasern und mindestens 5 Gew.-% an Bindefasern umfasst oder hieraus besteht.

## Claims

1. A vacuum cleaner filter bag comprising a wall, that encloses an inner space and consists of an air-permeable material, as well as an inlet opening formed in the wall,
wherein the air-permeable material comprises at least one layer of a non-woven fabric, that comprises a dust-like and/or fiber-like recycled material from the production of textiles, in particular cotton textiles, and/or from clipping wool and/or seed fibers, and
wherein the at least one layer of non-woven fabric comprising at least one dust-like and/or fiber-like recycled material comprises or consists of up to 95 weight-% of dust-like and/or fiber-like recycled material and/or seed fibers and at least 5 weight-% of binding fibers.

2. The vacuum cleaner filter bag according to claim 1, wherein the dust-like and/or fiber-like recycled material is a cotton dust, and the seed fibers are respectively cotton linter or kapok fibers.

3. The vacuum cleaner filter bag according to one of the afore-mentioned claims,
wherein the at least one layer of non-woven fabric comprising a dust-like and/or fiber-like recycled material and/or seed fibers comprises or consists of 70 to 90 weight-% of dust-like and/or fiber-like recycled material and/or seed fibers and 10 to 30 weight-% of binding fibers, in particular bi-component fibers.

4. The vacuum cleaner filter bag according to the afore-mentioned claim, wherein the binding fibers comprise staple fibers with a length of 2 to 75 mm, preferably 2 to 25 mm.

5. The vacuum cleaner filter bag according to claim 3, wherein the bi-component fibers consist of a core consisting of a
first thermoplastic material and a mantle consisting of a second thermoplastic material that melts at lower temperatures compared to the first thermoplastic material, wherein preferably the core, or the core as well as the mantle, consist of a recycled synthetic material or several recycled synthetic materials.

6. The vacuum cleaner filter bag according to one of the afore-mentioned claims,
wherein the air-permeable material is constructed of multiple layers, wherein, in addition to the at least one layer of non-woven fabric, which comprises a dust-like and/or fiber-like recycled material and/or seed fibers, the air-permeable material comprises at least one additional layer, which comprises or consists of a non-woven fabric and/or a fiber fleece, wherein at least one, several or all the additional layers comprise or consist of one or several recycled synthetic materials.

7. The vacuum cleaner filter bag according to one of the afore-mentioned claims, wherein the air-permeable material
comprises at least one support layer and at least one capacity layer, wherein at least one or all the support layers describe non-woven fabrics and/or at least one or all the capacity layers describe non-woven fabrics or fiber fleeces, which comprise or consist of a recycled synthetic material or several recycled synthetic materials, or
comprises at least one fine filter layer, at least one capacity layer and optionally at least one support layer, wherein at least one or all of the optional support layers and/or at least one or all of the fine filter layers describe non-woven fabrics, consisting of a recycled synthetic material or several recycled synthetic materials and/or at least one or all of the capacity layers describe non-woven fabrics of fiber fleeces, which comprise or consist of a recycled synthetic material or several recycled synthetic materials,
wherein at least one, preferably all the capacity layers, comprise or consist of the nonwoven fabric that comprises a dust-like and/or fiber-like recycled material and/or seed fibers.

8. The vacuum cleaner filter bag according to the afore-mentioned claim, wherein
a) each support layer is a spun-bonded fabric or scrim, preferably with a grammage of 5 to 80 g/m2, more preferably of 10 to 50 g/m2, more preferably of 15 to 30 g/m2 and/or preferably with a titer of the fibers forming the spun-bonded fabric or scrim in the range of 0.5 dtex to 15 dtex,
b) the air-permeable material comprises 1 to 3 support layers,
in a case, in which at least two support layers are provided, the total grammage of the sum of all support layers is 10 to 240 g/m2, preferably 15 to 150 g/m2, more preferably 20 to 100 g/m2, more preferably 30 to 90 g/m2, in particular 40 to 70 g/m2,
and/or
c) all the support layers consist of a recycled synthetic material or several recycled synthetic materials, in particular of rPET.

9. The vacuum cleaner filter bag according to one of the two afore-mentioned claims, wherein
a) each fine filter layer is an extruded non-woven fabric, in particular a melt-blown non-woven fabric, preferably with a grammage of 5 to 100 g/m2, preferably 10 to 50 g/m2, in particular 10 to 30 g/m2,
b) the air-permeable material comprises 1 to 5 fine filter layers,
c) in a case, in which at least two fine filter layers are provided, the total grammage of the sum of all fine filter layers is 10 to 300 g/m2, preferably 15 to 150 g/m2, in particular 20 to 50 g/m2,
d) at least one, preferably all the fine filter layers consist of a recycled synthetic material or several recycled synthetic materials, in particular of rPET, and/or
e) at least one, preferably all the fine filter layers are electrostatically charged.

10. The vacuum cleaner filter bag according to one of the claims 7 to 9, wherein
a) at least one, preferably each capacity layer is a non-woven fabric that comprises a dust-like and/or fiber-like recycled material from the production of textiles, in particular cotton textiles, and/or from clipping wool and/or seed fibers, wherein each capacity layer preferably has a grammage of 5 to 200 g/m2, more preferably of 10 to 150 g/m2, more preferably 20 to 100 g/m2, in particular 30 to 50 g/m2,
b) the air-permeable material comprises 1 to 5 capacity layers, and/or
c) in a case, in which at least two capacity layers are provided, the total grammage of the sum of all capacity layers is 10 to 300 g/m2, preferably 15 to 200 g/m2, more preferably 20 to 100 g/m2, in particular 50 to 90 g/m2.

11. The vacuum cleaner filter bag according to one of the claims 7 to 10, wherein the air-permeable material is formed of multiple layers, which are arranged in the following order when seen from the inner space of the vacuum cleaner filter bag:
one support layer, at least one, preferably at least two capacity layers, preferably one additional support layer, at least one, preferably at least two fine filter layers, as well as one additional support layer.

12. The vacuum cleaner filter bag according to one of the afore-mentioned claims, wherein the vacuum cleaner filter bag comprises a retaining plate surrounding the inlet opening, which consists of one or several recycled synthetic materials and or comprises one or several recycled synthetic materials.

13. The vacuum cleaner filter bag according to one of the afore-mentioned claims, wherein at least one flow distributor and/or one diffuser are disposed in the inner space, wherein the at least one flow distributor and/or the at least one diffusor preferably consist of a recycled synthetic material or of several recycled synthetic materials or of a non-woven fabric that comprises a dust-like and/or fiber-like recycled material from the production of textiles, in particular cotton textiles, and/or from wool clipping and/or seed fibers.

14. The vacuum cleaner filter bag according to one of the afore-mentioned claims, wherein the recycled synthetic material is chosen from the group consisting of recycled polyesters, in particular recycled polyethylene terephthalate (rPET), recycled polybutylene terephthalate (rPBT), recycled polylactic acid (rPLA), recycled polyglycolide and/or recycled polycaprolactone; recycled polyolefines, in particular recycled polypropylene (rPP), recycled polyethylene and/or recycled polystyrene (rPS); recycled polyvinylchloride (rPVC), recycled polyamides, as well as mixtures and combinations thereof.

15. The vacuum cleaner filter bag according to one of the afore-mentioned claims, wherein the weight proportion of all the recycled materials and/or of the cotton linters relative to the total weight of the vacuum cleaner filter bag is at least 25%, preferably at least 30%, more preferably at least 40%, more preferably at least 50%, more preferably at least 60%, more preferably at least 70%, more preferably at least 80%, more preferably at least 90%, in particular at least 95%.

16. The vacuum cleaner filter bag according to one of the afore-mentioned claims, in the form of a flat bag, a block bottom bag or a 3D bag.

17. Use of a non-woven fabric that comprises a dust-like and/or fiber-like recycled material from the production of textiles, in particular cotton textiles, and/or wool clipping and/or seed fibers for vacuum cleaner filter bags and
wherein the at least one non-woven fabric comprising a dust-like and/or fiber-like recycled material and/or seed fibers comprises or consists of up to 95 weight-% of dust-like and/or fiber-like recycled material and/or seed fibers and at least 5 weight-% of binding fibers.

## Revendications

1. Sac filtrant d'aspirateur à poussière comprenant une paroi entourant un espace intérieur constituée d'un matériau perméable à l'air, ainsi qu'une ouverture d'entrée ménagée dans la paroi,
où le matériau perméable à l'air comporte au moins une couche de non-tissé qui comprend un matériau recyclé pulvérulent et/ou fibreux issu de la production de textiles, en particulier de textiles en coton, et/ou issu de la laine de tonte et/ou de fibres séminales, et
où l'au moins une couche de non-tissé comprenant un matériau recyclé pulvérulent et/ou fibreux et/ou des fibres séminales comprend ou se compose de jusqu'à 95 % en poids de matériau recyclé pulvérulent et/ou fibreux et/ou de fibres séminales et d'au moins 5% en poids de fibres liantes.

2. Sac filtrant d'aspirateur à poussière selon la revendication 1, dans lequel le matériau recyclé pulvérulent et/ou fibreux, ou respectivement les fibres séminales sont du linter de coton ou des fibres de kapok.

3. Sac filtrant d'aspirateur à poussière selon l'une des revendications précédentes, dans lequel l'au moins une couche de non-tissé comprenant un matériau recyclé pulvérulent et/ou fibreux et/ou des fibres séminales comprend ou se compose de 70 à 90% en poids de matériau recyclé pulvérulent et/ou fibreux et/ou de fibres séminales et 10 à 30% en poids de fibres liantes, en particulier de fibres à deux composants.

4. Sac filtrant d'aspirateur à poussière selon la revendication précédente, dans lequel les fibres liantes comportent des fibres discontinues d'une longueur de 2 à 75 mm, de préférence de 2 à 25 mm.

5. Sac filtrant d'aspirateur à poussière selon la revendication 3, dans lequel les fibres à deux composants se composent d'un noyau
qui se compose d'un premier matériau thermoplastique et d'un manteau qui se compose d'un deuxième matériau thermoplastique fondant à des températures plus basses que le premier matériau thermoplastique, où de préférence le noyau ou bien le noyau et le manteau se composent d'un matériau synthétique recyclé ou de plusieurs matériaux synthétiques recyclés.

6. Sac filtrant d'aspirateur à poussière selon l'une des revendications précédentes, dans lequel le matériau perméable à l'air est constitué de plusieurs couches, où le matériau perméable à l'air comporte, en plus de l'au moins une couche de non-tissé qui comprend un matériau pulvérulent et/ou fibreux et/ou des fibres séminales, au moins une autre couche qui comprend ou se compose d'un non-tissé et/ou d'un non-tissé à fibres, où au moins une, plusieurs ou toutes les couches supplémentaires comprennent ou se composent d'un ou plusieurs matériaux synthétiques recyclés.

7. Sac filtrant d'aspirateur à poussière selon l'une des revendications précédentes, dans lequel le matériau perméable à l'air
comporte au moins une couche support et au moins une couche de capacité, où au moins une ou toutes les couches de support représentent des non-tissés et/ou au moins une ou toutes les couches de capacité représentent des non-tissés ou des non-tissés à fibres qui comprennent ou se composent d'un matériau synthétique recyclé ou de plusieurs matériaux synthétiques recyclés, ou
comporte au moins une couche de filtre fin, au moins une couche de capacité et, en option, au moins une couche de support, où au moins une ou toutes les couches de support optionnelles et/ou au moins une ou toutes les couches de filtre fin représentent des non-tissés qui se composent d'un matériau synthétique recyclé ou de plusieurs matériaux synthétiques recyclés et/ou au moins une ou toutes les couches de capacité représentent des non-tissés ou des non-tissés fibreux qui comprennent ou se composent d'un matériau synthétique recyclé ou de plusieurs matériaux synthétiques recyclés,
où au moins une, de préférence toutes les couches de capacité comprennent ou se composent du non-tissé qui comprend un matériau recyclé pulvérulent et/ou fibreux et/ou des fibres séminales.

8. Sac filtrant d'aspirateur à poussière selon la revendication précédente, où
a) chaque couche support est un non-tissé filé-lié ou une gaze, de préférence avec un grammage de 5 à 80 g/m2, plus préférablement 10 à 50 g/m2, plus préférablement 15 à 30 g/m2, et/ou de préférence avec des fibres composant le non-tissé filé-lié ou la gaze ayant un titre compris entre 0,5 dtex et 15 dtex,
b) le matériau perméable à l'air comprend 1 à 3 couches support,
en présence d'au moins deux couches support, le grammage total de la somme de toutes les couches support est de 10 à 240 g/m2, de préférence 15 à 150 g/m2, plus préférablement 20 à 100 g/m2, plus préférablement 30 à 90 g/m2, en particulier de 40 à 70 g/m2,
et/ou
c) toutes les couches support se composent d'un matériau synthétique recyclé ou de plusieurs matériaux synthétiques recyclés, en particulier de rPET.

9. Sac filtrant d'aspirateur à poussière selon l'une des deux revendications précédentes, où
a) chaque couche de filtre fin est un non-tissé extrudé, en particulier un non-tissé soufflé à l'état fondu, de préférence avec un grammage de 5 à 100 g/m2, de préférence 10 à 50 g/m2, en particulier 10 à 30 g/m2,
b) le matériau perméable à l'air comprend 1 à 5 couches de filtre fin,
c) en présence d'au moins deux couches de filtre fin, le grammage total de la somme de toutes les couches de filtre fin est de 10 à 300 g/m2, de préférence 15 à 150 g/m2, en particulier 20 à 50 g/m2,
d) au moins une, de préférence toutes les couches de filtre fin se composent d'un matériau synthétique recyclé ou de plusieurs matériaux synthétiques recyclés, en particulier de rPET, et/ou
e) au moins une, de préférence toutes les couches de filtre fin sont chargées électrostatiquement.

10. Sac filtrant d'aspirateur à poussière selon l'une des revendications 7 à 9, où
a) au moins une, de préférence chaque couche de capacité est un non-tissé qui comporte un matériau recyclé pulvérulent et/ou fibreux issu de la production de textiles, en particulier de textiles en coton, et/ou issu de la laine de tonte et/ou de fibres séminales, où chaque couche de capacité présente de préférence un grammage de 5 à 200 g/m2, de préférence 10 à 150 g/m2, plus préférablement 20 à 100 g/m2, en particulier de 30 à 50 g/m2,
b) le matériau perméable à l'air comprend 1 à 5 couches de capacité, et/ou
c) en présence d'au moins deux couches de capacité, le grammage total de la somme de toutes les couches de capacité est de 10 à 300 g/m2, de préférence 15 à 200 g/m2, plus préférablement 20 à 100 g/m2, en particulier de 50 à 90 g/m2.

11. Sac filtrant d'aspirateur à poussière selon l'une des revendications 7 à 10, où le matériau perméable à l'air est formé de plusieurs couches agencées dans l'ordre suivant en partant de l'espace intérieur du sac filtrant d'aspirateur à poussière :
une couche de support, au moins une, de préférence au moins deux couches de capacité, de préférence une autre couche de support, au moins une, de préférence au moins deux couches de filtre fin et une autre couche de support.

12. Sac filtrant d'aspirateur à poussière selon l'une des revendications précédentes, où le sac filtrant d'aspirateur à poussière comporte une plaque de maintien encadrant l'ouverture d'entrée composée d'un ou plusieurs matériaux synthétiques recyclés ou comportant un ou plusieurs matériaux synthétiques recyclés.

13. Sac filtrant d'aspirateur à poussière selon l'une des revendications précédentes, où au moins un distributeur d'écoulement et/ou au moins diffuseur sont disposés dans l'espace intérieur, où l'au moins un distributeur d'écoulement et/ou l'au moins un diffuseur se composent de préférence d'un matériau synthétique recyclé ou de plusieurs matériaux synthétiques recyclés ou d'un non-tissé qui comprend un matériau recyclé pulvérulent et/ou fibreux issu de la production de textiles, en particulier de textiles en coton, et/ou issu de la laine de tonte et/ou de fibres séminales.

14. Sac filtrant d'aspirateur à poussière selon l'une des revendications précédentes, où le matériau synthétique recyclé est choisi parmi le groupe composé des polyesters recyclés, en particulier du polyéthylène téréphtalate recyclé (rPET), du polybutylène téréphtalate recyclé (rPBT), de l'acide polylactique recyclé (rPLA), du polyglycolide recyclé et/ou du polycaprolactone recyclé ; des polyoléfines recyclés, en particulier du polypropylène recyclé (rPP), du polyéthylène recyclé et/ou du polystyrène recyclé (rPS) ; du polychlorure de vinyle recyclé (rPVC), des polyamides recyclés et de leurs mélanges et combinaisons.

15. Sac filtrant d'aspirateur à poussière selon l'une des revendications précédentes, où la proportion en poids de tous les matériaux recyclés et/ou du linter de coton par rapport au poids total du sac filtrant d'aspirateur à poussière représente au moins 25%, de préférence au moins 30%, de préférence au moins 40%, de préférence au moins 50%, de préférence au moins 60%, de préférence au moins 70%, de préférence au moins 80%, de préférence au moins 90%, en particulier au moins 95%.

16. Sac filtrant d'aspirateur à poussière selon l'une des revendications précédentes sous forme d'un sac plat, d'un sac à fond plat ou d'un sac en 3D.

17. Utilisation d'un non-tissé qui comprend un matériau recyclé pulvérulent et/ou fibreux issu de la production de textiles, en particulier de textiles en coton, et/ou issu de la laine de tonte et/ou de fibres séminales pour un sac filtrant d'aspirateur à poussières et
où l'au moins un non-tissé comportant un matériau recyclé pulvérulent et/ou fibreux et/ou des fibres séminales comprend ou se compose d'au moins 95% en poids de matériau recyclé pulvérulent et/ou fibreux et/ou de fibres séminales et d'au moins 5% en poids de fibres liantes.
